# EUROPÄISCHE PATENTANMELDUNG

(11) **EP 1 595 756 A2**
(43) Veröffentlichungstag der Anmeldung: **16.11.2005**
(21) Anmeldenummer: 05405337.6
(22) Anmeldetag: 04.05.2005
(51) Int. Cl.: B60R 21/34, B60R 19/20, B60R 9/06, B60R 21/16, B60J 7/00, B60K 11/08

(54) **Pneumatisch aufblasbarer Bauteil für Fahrzeuge**

(30) Priorität: 10.05.2004 CH 8182004
(71) Anmelder: Protoscar SA, 6821 Rovio (CH)
(72) Erfinder: Piffaretti, Marco, 6821 Rovio (CH)
(74) Vertreter: Gaggini, Carlo

(57) **Zusammenfassung**

Die Erfindung betrifft pneumatisch aufblasbare und ortsfest auf einem Fahrzeug (1) montierte Bauteile, vorzugsweise auf einem Personenwagen.

Die Erfindung sieht vorzugsweise vor, dass der aufblasbare Teil (1, 2, 8, 9, 10, 11, 12, 13, 14, 15, 16, 18; 28) auf einer äusseren Stelle der Karosserie des Fahrzeuges (1) montiert ist und dass er, nach dem Aufpumpen, eine Schutzfunktion für das Fahrzeug (1) und/oder gegen Unfallgefahr seitens Dritter (im besonderen Fussgänger) und/oder andere Funktionen wie die aerodynamische Umänderung des Fahrzeuges (1) und/oder die Abänderung des Nutzvolumens des Fahrzeuges (1) (Kofferraum) und/oder andere Funktionen, welche die Sicherheit und Zuverlässigkeit des Fahrzeuges (1) erhöhen.

Der pneumatisch aufblasbare Bauteil kann, je nach Gebrauch, von Hand durch eine Handpumpe oder automatisch durch einen Luftkompressor aufgepumpt werden, der von einem oder mehreren Sensoren betätigt wird, welche die Einsatzbedingungen des aufblasbaren Teiles bestimmen.

## Beschreibung

Die vorliegende Erfindung betrifft ein pneumatisch aufblasbarer Bauteil gemäss Patentanspruch 1.

Die Verwendung von pneumatisch aufblasbaren Teilen, Airbags genannt, welche im Wageninnenraum und auch auf der Innenseite der Wagentüren befestigt werden, ist in der Automobilindustrie, besonders in der Fabrikation von Personenwagen, üblich geworden.

Diese Airbags haben eine ganz bestimmte Funktion, d.h. sie müssen im Falle eines Aufpralls gegen ein Hindernis, blitzschnell, fast explosiv, aufgepumpt werden, um eine Art Schutzmatratze für den Fahrer oder für die Insassen des Wagens zu bilden.

Die Airbags sind Einweg-Teile, d.h. sie können nur einmal aufgepumpt und müssen nach Gebrauch ersetzt werden. In der Tat, ihre Reaktionsgeschwindigkeit ist notwendig, weil davon hängt ihre Schutzwirksamkeit ab. Das Aufpumpen der Airbags kann also nur durch "Explosion" eines unter Druck stehenden Gasbehälters geschehen.

Die Erfindung richtet sich auch nach der heutzutage immer grösseren Verwendung von pneumatisch aufblasbaren Teilen für die verschiedensten Zwecke: denkt man nur an aufblasbare Luftmatratzen, an aufblasbare Luftkissen für die verschiedensten Anwendungen um Körperteile zu stützen, usw.

Man weiss auch von besonderen Realisierungen, wie zum Beispiel ein Flugzeug mit aufblasbaren Flügeln oder sogar ein luftdichter Reissverschluss, dank der Eigenschaft, dass er mit Druck pneumatisch geschlossen wird. Die vorliegende Erfindung beabsichtigt, all diese in den verschiedensten Gebieten erworbenen Kenntnisse zu nutzen und sie anzuwenden, um die Sicherheit, Komfort und Wirtschaftlichkeit der Fahrzeuge, insbesondere der Personenwagen, zu verbessern. Generell beabsichtigt die Erfindung dem Hersteller im Zusammenhang mit der Anwendung von pneumatisch aufblasbaren Bauteilen eine ganze Reihe von Möglichkeiten vorzuschlagen, welche es ermöglichen, einzeln oder kombiniert die folgenden Vorteile zu erzielen
- die Sicherheit der Fahrzeuge hinsichtlich der anderen Verkehrsteilnehmern im Falle eines Zusammenstosses zu steigern, hauptsächlich wenn Fussgänger oder Personen mit wenig Schutz (z.B. Radfahrer usw.) einbezogen sind
- den Schutz des Fahrzeuges gegen die Gefahr von äusseren Beschädigungen (z.B. Stossfänger, Türen, usw.) zu steigern
- die aerodynamischen und Fahrverhaltensmerkmale des Fahrzeuges, beziehungsweise die Strassenhaltung desselben zu steigern, indem man sie an die spezifischen Fahrbedingungen anpasst (Geschwindigkeit, Strassenzustand, usw.)
- den Komfort und die Verwendungsmöglichkeiten des Fahrzeuges für den Benutzer zu steigern, indem man in Bereichen eingreift, wie die Abdeckungsmöglichkeit oder die Grösse und die Form des Kofferraumes, usw.
- die Betriebsbedingungen des Fahrzeuges zu steigern, z.B. die Motorkühlung.

Diese, sowie andere hier nicht hervorgehobenen möglichen Vorteile, können untersucht werden, indem man für einen pneumatisch aufblasbaren Bauteil gemäss Patentanspruch 1, die Eigenschaften des beschreibenden Teiles desselben Patenanspruches 1 anwendet.

Die innovative Seite der vorliegenden Erfindung besteht wesentlich darin, dass der pneumatisch aufblasbare Teil an einem äusseren Teil der Karosserie fest angebracht wird und deshalb keine direkte Schutzfunktion für die Benutzer des Fahrzeuges hat, Funktion welche von den jetzigen Airbags ausgezeichnet erfüllt wird. Der Teil erfüllt anderseits eine oder mehrere Funktionen, welche es ermöglichen, die oben genannten Vorteile zu erzielen.

Es sei hier hervorgehoben, dass man am gleichen Fahrzeug eine ganze Reihe verschiedener pneumatisch aufblasbarer Teile, wie der gezeigte, angebracht werden können, jeder davon an einem verschiedenen Aussenteil der Karosserie und jeder mit einer anderen spezifischen Funktion.

Die pneumatisch aufblasbaren Bauteile können dann durch den Benutzer handbetätigt mittels einer Luftpumpe (oder eines Luftkompressors) aufgepumpt werden, oder automatisch gemäss einer anderen Variante, je nach Bedarf des Teiles selbst. Anders gesagt: der aufblasbare Teil kann durch den Benutzer aufgepumpt werden, wenn dieser es für zweckmässig hält (z.B. um das Verdeck des Fahrzeuges zu öffnen, falls der Teil in einem Hebedach eingebaut ist), oder der Teil kann automatisch durch einen für diese Funktion bestimmten Sensor aufgepumpt werden, wenn die Bedingungen es verlangen, der die Nützlichkeit dessen bemerkt (z.B. wenn der Strassenzustand verlangt, eine bestimmte aerodynamische Kennlinie des Fahrzeuges zu ändern worauf der Teil voreingestellt ist).

Entsprechend den vorgesehenen erfinderischen Anwendungen des pneumatisch aufblasbaren Teiles, begreift man sofort, dass das Aufpumpen desselben normalerweise langsam geschieht und im Wesentlichen in verschiedenen, getrennten Stufen, das heisst in total entgegengesetzter Art und Weise als dasjenige der Airbags im Innern des Fahrzeuges, für welche die Geschwindigkeit des Aufpumpens ein grundlegender Parameter ist. Eben diese relative Langsamkeit ermöglicht es, für diese Arbeit eine kleine Pumpe oder Kompressor, oder sogar, für einen bestimmten beschränkten Gebrauch, eine Handpumpe einzusetzen. Nicht jeder Gebrauch des erfinderischen aufblasbaren Teiles ist nämlich dazu vorgesehen, während der Fahrt betätigt zu werden. Wie nachfolgend erklärt wird, hat es Einsätze, welche ohne weiteres erlauben, oder sogar verlangen, dass der aufblasbare Teil bei stillstehendem Wagen betätigt wird: in solchen Fällen kann eine Handpumpe als einfache und nicht sehr teure Lösung in Betracht gezogen werden.

Die Erfindung ist nun mit Hilfe einiger Realisationsbeispielen und deren Abbildungen im Detail beschrieben.

Die Bilder zeigen:
- Bild 1 einen erfinderischen aufblasbaren Bauteil als Hebedach des Verdeckes eines Fahrzeuges,
- Bild 2 den aufblasbaren Teil des Bildes 1 während den verschiedenen Aufpumpphasen,
- Bild 3 einen aufblasbaren Teil, einen Dachgepäckträger (Torpedo) bildend, in aufgepumpter Stellung,
- Bild 4 den Teil des Bildes 3 in Ruhestellung, d.h. ausgepumpt,
- Bild 5 den aufgepumpten Teil der Bilder 1 und 2 im Querschnitt, in drei verschiedenen Phasen, d.h. oben in Ruhestellung laut Bild 4, unten in Arbeitsstellung laut Bild 3 und in der Mitte in einer Zwischenstellung während des Aufpumpens,
- Bild 6 einen aufblasbaren Teil realisisert als Heckspoiler eines Fahrzeuges,
- Bild 7 ein Fahrzeug ausgerüstet mit zwei Typen von aufblasbaren Bauteilen laut Erfindung, und zwar einen Vorderspoiler und einen Seitenspoiler (im Automobilfachjargon "Minirock" genannt),
- Bild 8 einen aufblasbaren Teil einen Vorhang bildend, welcher den Abstand zwischen dem Rad und die Karosserie des Wagens verringert,
- Bild 9 einen aufblasbaren Teil die Motorhaube bildend,
- Bild 10 einen aufblasbaren Teil der einen Schutz für die senkrechte Kante der Wagentüre bildet,
- Bild 11 einen aufblasbaren Teil, der einen Seitenschutz der Karosserie zwischen den zwei Rädern auf der gleichen Seite bildet,
- Bild 12 einen aufblasbaren Teil, der einen Teil einer Frontschürze des Fahrzeuges bildet,
- Bild 13 einen aufblasbaren Teil, der einen Teil des Lüftungsgitters eines Fahrzeuges bildet und welcher in offener Stellung steht, um mehr Kühlluft durchzulassen,
- Bild 14 den Teil des Bildes 13 in geschlossener Stellung, um weniger Kühlluft durchzulassen,
- Bild 15 einen aufblasbaren Teil, der den hinteren Kofferraum eines Fahrzeuges bildet, so beschaffen, dass eine Limousine in einen Kombiwagen verwandelt wird,

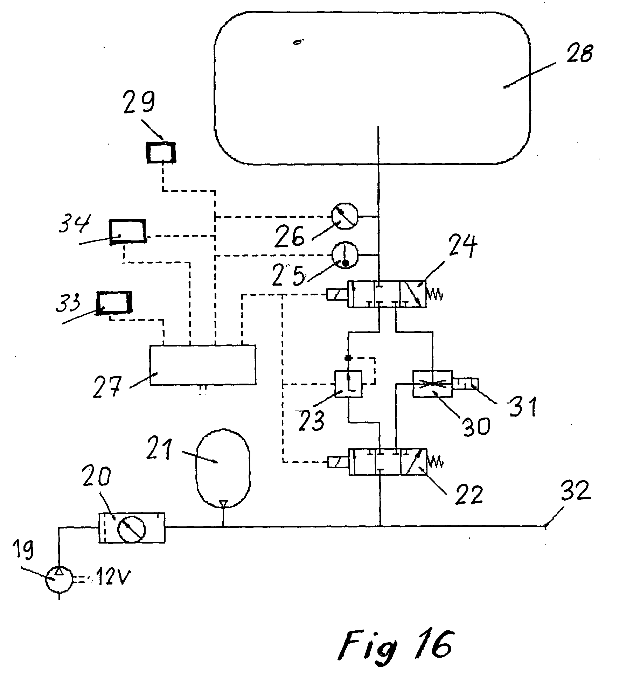

- Bild 16 die Skizze einer Antriebs- und Steuerungseinheit des Kompressors, um die pneumatisch aufblasbaren Bauteile laut Erfindung zu betätigen.

Bevor wir mehr auf die Einzelheiten der Bilder eingehen, machen wir darauf aufmerksam, dass die abgebildeten erfinderischen aufblasbaren Teile, in allen Bildern, kreuzweise schraffiert wurden, um sie leichter erkenntlich zu machen. Praktisch wurde für die Bilder immer den gleichen Fahrzeugtyp angewendet, aber es versteht sich, dass die Erfindung für jeden Fahrzeugtyp angewendet werden kann, sei er Limousine, Kombiwagen, Pick-Up, Transporter oder Lastwagen, indem man für jede Anwendung den aufblasbaren Teil (oder die Teile) aussucht, welcher laut Erfindung zu diesem Zweck besser geeignet ist.

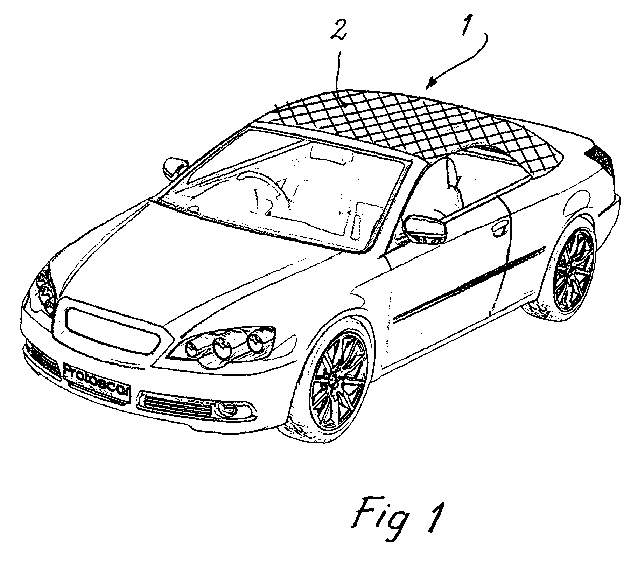

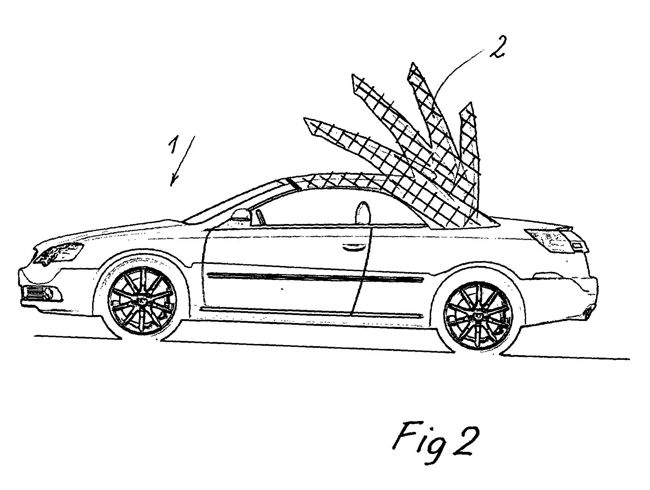

Bild 1 stellt ein Fahrzeug dar, welches einen pneumatisch aufblasbaren Bauteil in Form eines aufblasbaren Hebedachs 2 aufweist. In diesem Bild ist das Hebedach geschlossen, hingegen ist es im Bild 2 in den vier verschiedenen Schliessstufen dargestellt.

Das aufblasbare Hebedach 2 ist, im offenen Zustand wie ein gewöhnliches Schiebedach eines Kabriolets in einem Raum hinter dem Rücksitz enthalten. Am besten sollte sich das aufblasbare Hebedach 2 aus mehr als einer pneumatischen Kammer zusammensetzen und möglicherweise mit den nötigen seitlichen Bedienungshebeln versehen sein, welche eine stufenweise Öffnung gegen oben gewährleisten, sodass die Insassen des Fahrzeuges nicht gestört werden. Diese Mechanismen sind für jeden Fachmann leicht anzufertigen und werden hier nicht beschrieben, da sie nicht Gegenstand dieser Erfindung sind. Solch ein Mechanismus kann zum Beispiel die Verwendung von pneumatischen Kolben voraussetzen, welche das Hebewerk des Hebedaches 2 heben (und senken). Die Bedienung der Pumpe, welche die Kammern des Hebedachs betätigen, sollte am besten manuell geschehen indem der Fahrer einen dazu bestimmten Schalter betätigt. Das Hebedach kann entweder bei Stillstand oder während der Fahrt betätigt werden: es reicht aus, dass die Beschaffenheit der pneumatischen Kammern, welche das Dach bilden und sich während der Abfüllung mit Luftdruck unterziehen müssen, es schafft, die aerodynamische Schubkraft des Windes während der Fahrt auszuhalten.

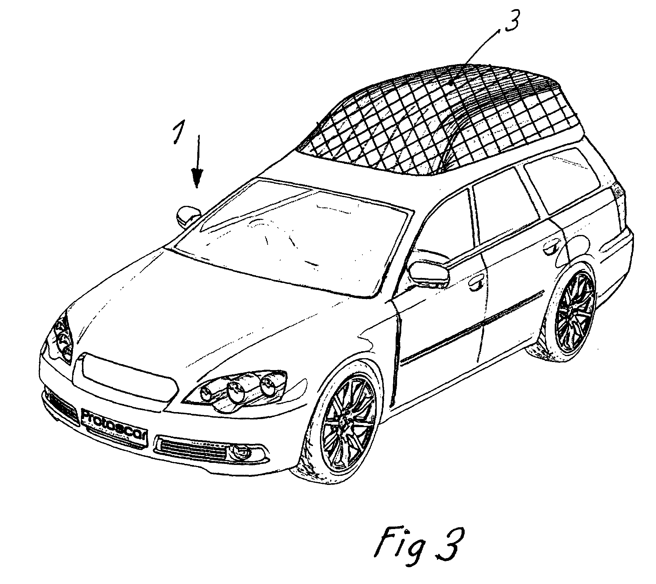

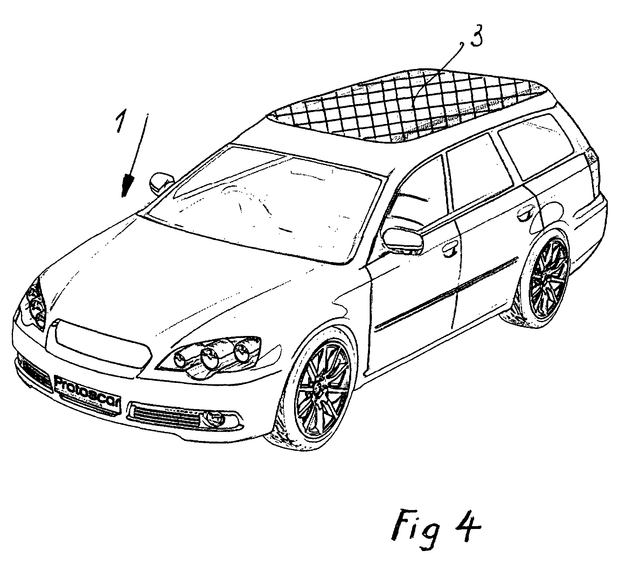

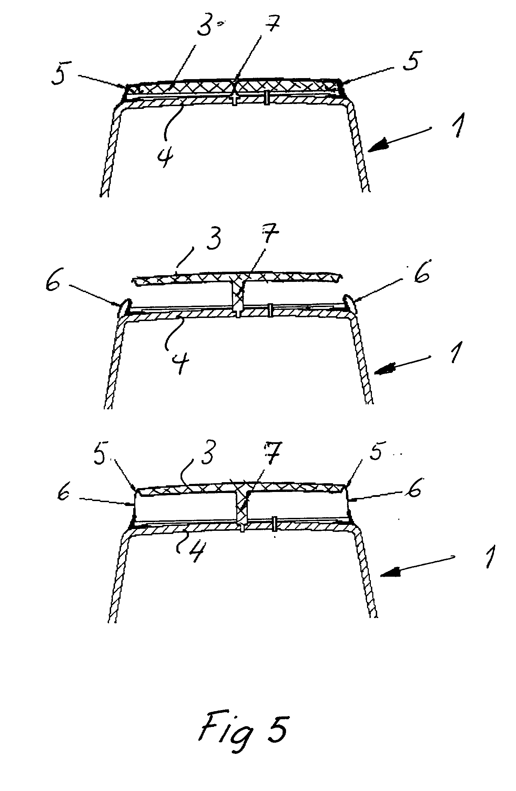

Bilder 3, 4 und 5 zeigen eine andere Verwendungsvariante der vorliegenden Erfindung in welcher der pneumatisch aufblasbare Bauteil die Form eines Dachgepäckträgers (im Fachjargon auch "Torpedo" genannt) darstellt. Im Bild 3 ist der Gepäckträger in Arbeitsstellung, das heisst "aufgepumpt", während er im Bild 4 als eine flache dem Fahrzeugdach anliegende Form erscheint. Bild 5 zeigt mehr im Detail den Bau des aufblasbaren Gepäckträgers 3. Oben im Bild 5 sieht man den Teil 3 in Ruhestellung, das heisst der Gepäckträger liegt eng am Fahrzeugdach 4 an und ist vorzugsweise unter Druck und zwar minimal, sodass er leicht gespannt ist. Auf beiden Seiten von Teil 3 ist die Hälfte eines manuell zu betätigen Reissverschlusses 5. Auf beiden Seiten des Fahrzeugdaches 4 (und sogar vorzugsweise auf allen vier Seiten des Gepäckträgers) ist ein Streifen biegsamen Stoffes 6 angefestigt, der mit der anderen Hälfte des Reissverschlusses versehen ist, so dass man den oberen Teil des biegsamen Streifens (z.B. aus Gewebe) an die Bordkanten von Teil 3 befestigen kann. Somit kann man den Raum schliessen, in welchem man selbstverständlich zuvor die zu befördernden Gegegenstände (z.B. Skis, Snowboard, usw.) eingelegt und eingespannt hat. Der aufblasbare Teil 3 ist auch mit einem Hebewerk 7 versehen, der in verschiedener Ausführung sein darf (z.B. sogar aus einer aufblasbaren Kammer oder auch einem mechanischen Elementen bestehend) dessen Funktion darin liegt, den Gepäckträger 3 gegen oben zu schieben, wenn dieser unter Druck gesetzt wird. Die Baumerkmale der Teile 5 bis 7 werden im Bild 5 rein als Beispiel angeführt, da dieselben allgemein durch einen Fachmann ausgeführt werden können und jedenfalls nicht Gegenstand der vorliegenden Erfindung sind.

Auch die Bedienung des aufblasbaren Teiles aus welchem der Dachgepäckträger besteht, kann entweder manuell (äusserstenfalls mit Hilfe einer üblichen Fahrradpumpe) oder automatisch geschehen. Dies auch ist in Bezug auf die vorliegende Erfindung nebensächlich, da der Dachgepäckträger 3 ein Teil ist, welcher jederzeit und (selbstverständlich) vorzugsweise bei Stillstand aufgepumpt werden kann.

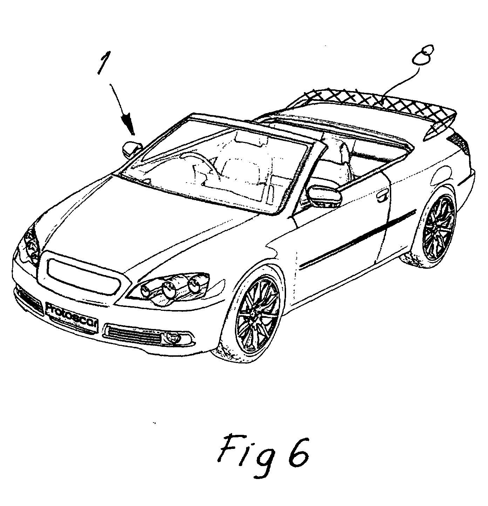

Laut einer anderen vorgezogenen Realisierungsform der Erfindung, wie im Bild 6 dargestellt, besteht der pneumatisch aufblasbare Teil aus den Heckspoiler 8 des Fahrzeuges 1. Diese Lösung ermöglicht es, die Form und die Stellung des Heckspoilers 8 durch Luftdruck zu verändern, was sehr wichtig ist, um auf das Fahrverhalten des Fahrzeuges bei Hochgeschwindigkeit zu beeinflussen. Folglich sollte in diesem Falle das Druckeinstellungssystem des aufblasbaren Teiles vorzugsweise automatisiert sein. Das heisst, eine Steuerungseinheit mit Geschwindigkeitssensoren des Fahrzeuges und einem Druckmesser des in den pneumatischen Spoiler 8 beförderten Luftdruckes, damit man den Aufpumpdruck der Geschwindigkeit des Fahrzeuges und somit den aerodynamischen Effekt des Spoilers 8 zweckmässig anpassen kann. Bei niedriger Geschwindigkeit könnte man sogar vorsehen, dass der Spoiler 8 völlig in die Karosserie zurückgeholt wird.

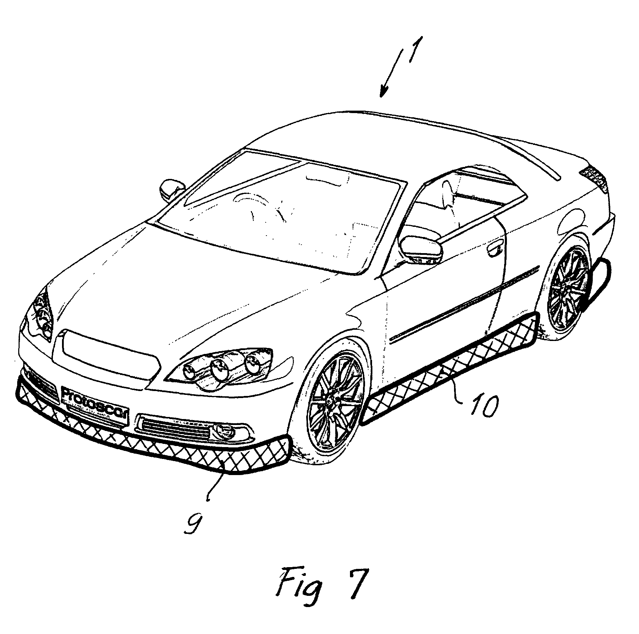

Laut einer weiteren vorgezogenen Realisierungsform der Erfindung, wie im Bild 7 dargestellt, besteht der pneumatische aufblasbare Teil aus einem Vorderspoiler 9 des Fahrzeuges 1, welcher mit dem Aufpumpen - vorzugsweise automatisch - absinkt und somit den Abstand zwischen Strasse und Fahrzeug verringert. Der Vorderspoiler 9 besteht grundsätzlich aus einer aufblasbaren schlauchförmigen Kammer, welche im unteren Teil des Lüftungsgitters des Fahrzeuges 1 befestigt ist.

Eine weitere vorgezogene Form der Erfindung, ebenfalls im Bild 7 gezeigt, sieht ferner vor, dass der pneumatisch aufblasbare Teil aus einem Seitenspoiler (im Fachjargon "Minirock" genannt) besteht, welcher mit dem Aufpumpen absinkt - vorzugsweise zusammen mit dem Vorderspoiler 9, wobei dies jedoch nicht eine unerlässliche Bedingung für die Realisation der Erfindung ist - und somit den Abstand zwischen Strasse und Fahrzeug verringert. Wie allgemein bekannt, ist die Turbulenzreduktion unter dem Fahrzeug, welche für andere Fahrzeugtypen durch die Senkung der ganzen Karosserie mittels Radaufhängung gelöst wurde, ein sehr wirksames Mittel um das Fahrverhalten zu verbessern, z.B. auf der Autobahn und um den Energieverbauch zu verringern.

Die aufgeblasenen Spoiler der vorliegenden Erfindung, vom Heckspoiler 8 bis Seitenspoiler 10, sind also Massnahmen - kombiniert oder auch einzeln verwendet - um die gleiche Wirkung zu erreichen wie diejenige der Fahrzeuge mit variabler Höhe.

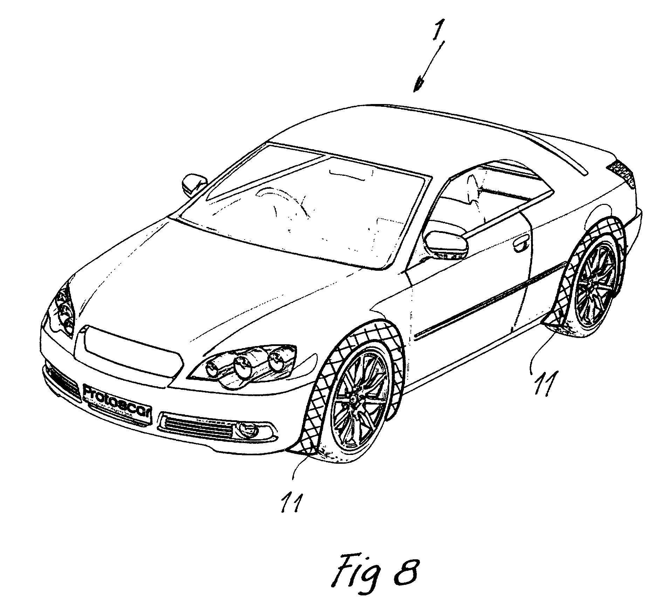

Ähnlich gedacht ist auch eine andere interessante Variante der Realisierung der Erfindung, wie im Bild 8 gezeigt. Laut dieser Variante - dessen Zweck es ist, die Turbulenz, welche bei hoher Geschwindigkeit im Raum zwischen Rad und Motor entsteht, zu beseitigen - sieht man vor, dass der pneumatisch aufblasbare Teil aus einem aufblasbaren Vorhang 11 besteht, der den genannten Raum verringert und somit die Bildung von Turbulenzen verhindert, respektiv reduziert, was die Fahrbedingungen und den Treibstoffverbrauch verbessert.

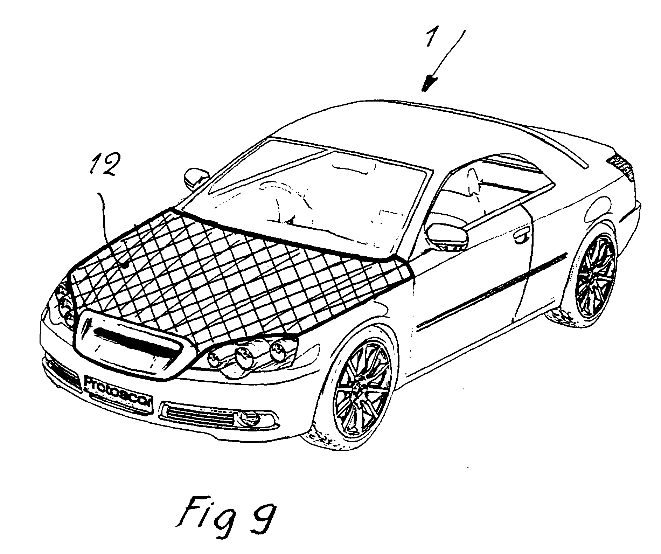

Laut einer anderen vorgezogenen Realisierungsform der Erfindung, wie im Bild 9 gezeigt, wird die erfinderische Idee dazu angewendet, um einen der wichtigsten Aspekte in Bezug auf Sicherheit des Fahrzeuges zu lösen, oder zumindest zu verbessern. Das heisst, die Gefahr, welche ein Fahrzeug im Falle eines Zusammenstosses mit einem Fussgänger oder einem Radfahrer darstellt. Man weiss, dass in einem solchen Fall die Fahrzeughaube eine äusserst gefährliche Prallfläche bildet. Die vorliegende Erfindung erlaubt, die Situation wesentlich zu verbessern, indem sie vorsieht, dass der pneumatisch aufblasbare Teil aus einer Abdeckung der Vorderhaube 12 besteht, welche nach dem Aufpumpen eine elastische Prallfläche bildet. In der praktischen Realisation kann die "aufblasbare Haube" aus einer selbsttragenden Struktur mit einer vielfalt von Luftschläuchen bestehen, wobei möglicherweise, um dessen Steifigkeit zu erhöhen, im Motorfach querlaufende Verstärkungsstücke vorgesehen werden können. Die "aufblasbare Haube" kann auch andere spezifische Wärme- und Schallisolierungs-, sowie Druckkontrolleigenschaften in den einzelnen Kammern, usw. aufweisen. Diese Eigenschaften gehören jedoch nicht zum Zweck der vorliegenden Erfindung und wir wollen deshalb nicht näher darauf eingehen.

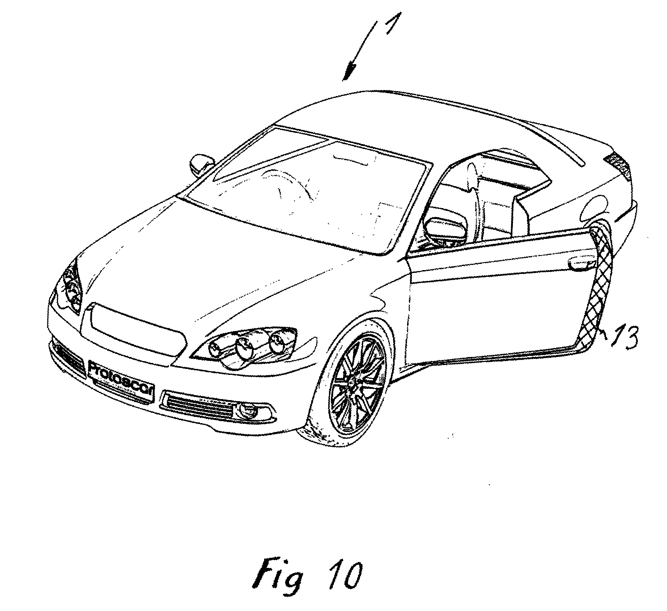

Eine weitere vorgezogene Realisierungsform der Erfindung, wie im Bild 10 dargestellt, sieht es vor, dass der pneumatisch aufblasbare Teil einen Schutz für die senkrechte Kante der Türe 13 bildet. Normalerweise ist dieser aufblasbare Teil platt und hinter der Türe verdeckt, von aussen unsichtbar und vielleicht sogar in eine zweckmässige Vertiefung zurückgezogen. Er kann z.B. automatisch aufgepumpt werden indem man manuell die Tür aufmacht und sich leeren, wenn man sie wieder zumacht. Der Zweck dieser erfinderischen Lösung liegt darin, dass man den Schaden am eigenen sowie am danebenstehenden Fahrzeug vermeidet, wenn man gezwungen ist, den Wagen in einem begrenzten Raum zu parken. Auch in diesem Falle kann die Realisierung auf verschiedene Weise geschehen und da sie nicht Gegenstand dieser Erfindung ist, überlassen wir sie der Kreativität des Fachmannes.

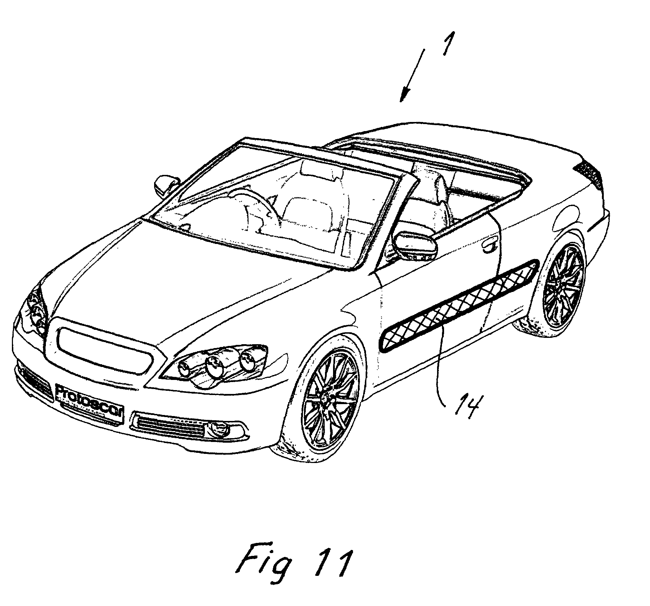

Ähnliche Vorteile wie die letztbeschriebenen, werden in einer weiteren vorgezogenen Realisationsform der Erfindung vorgesehen, wie im Bild 11 gezeigt. Diese sieht die Anwendung eines pneumatisch aufblasbaren Teiles vor, als Seitenschutz der Karosserie. Zweck und Funktionsablauf sind sehr ähnlich wie diejenigen für den Schutz der senkrechten Kante der Türe beschrieben.

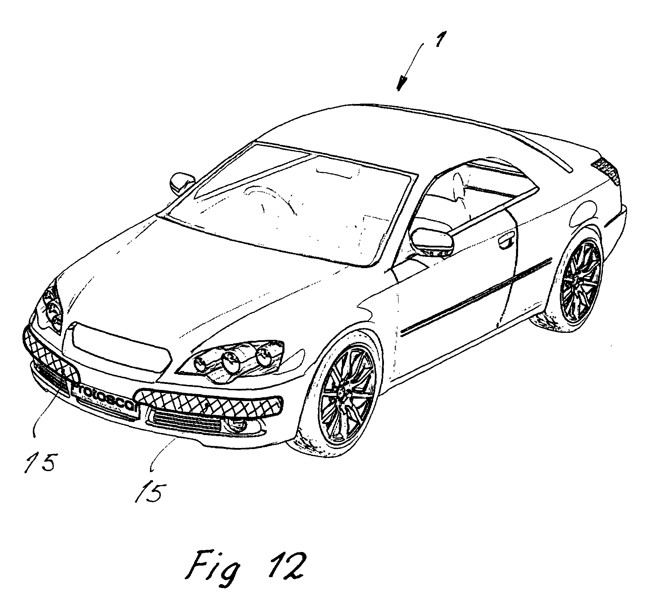

Eine weitere vorgezogene Variante der Erfindung sieht vor, wie im Bild 12 gezeigt, dass der pneumatisch aufblasbare Teil einen Teil 15 der Frontschürze des Fahrzeuges bildet. Diese Lösung erlaubt, die für den Fahrer wohl bekannten und unangenehmen Parkschäden zu verringern oder zu beseitigen. Auch diese Schutzvorrichtungen können entweder durch den Fahrer wenn nötig von Hand betätigt werden, oder automatisch "schnappen" durch ein Sensorsignal, welcher die übertriebene Nähe des Fahrzeuges an einem Hindernis anzeigt.

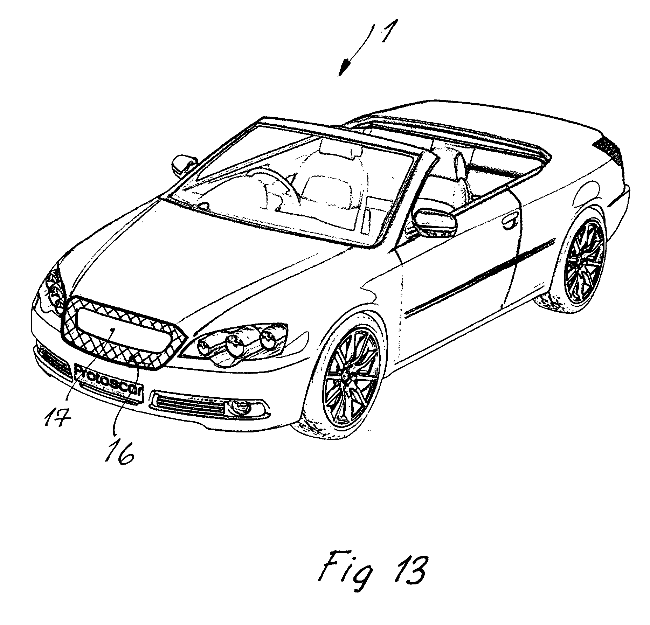

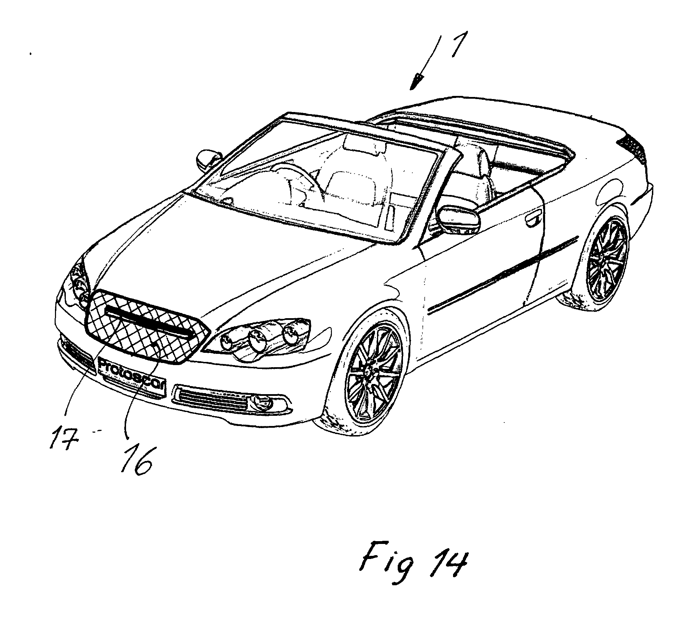

Die Bilder 13 und 14 zeigen eine weitere Realisationsvariante der Erfindung, welche die Betriebsbedingungen des Motors betrifft, hauptsächlich die Kühlluftregelung des Kühlers je nach Aussentemperatur und Motorleistung.

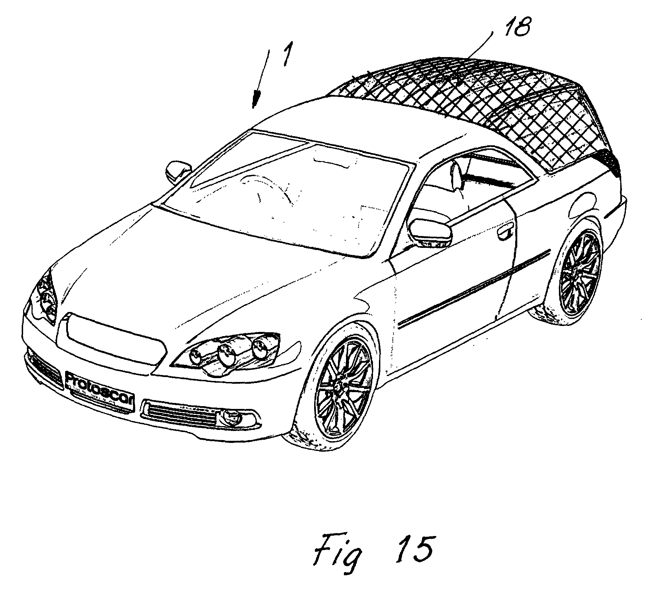

Zu diesem Zweck sieht die Erfindung vor, dass das Motorgitter 16 des Fahrzeuges 1, beziehungsweise das Lufteinlassgitter, als pneumatisch aufblasbarer Teil realisiert wird. Somit würde man ermöglichen, die Motorkühlluftzufuhröffnung 17, je nach grösserem oder geringerem Aufpumpgrad, mehr oder weniger zu schliessen. Im Bild 13 ist der aufblasbare Teil 16 des Gitters wenig aufgeblasen, folglich ist die Öffnung 17 weit und lässt viel Luft durch (z.B. wenn die Aussenlufttemperatur hoch ist), während im Bild 14 der aufblasbare Teil 16 des Gitters voll aufgepumpt ist, folglich ist die Öffnung 17 eingeschränkt und lässt ein Luftminimum durch (Winterbetrieb). Auch in diesem Falle sind die Betriebsmechanismen des aufblasbaren Gitters 16 (Aussen- und Motorluftsensor, Kompressor der Aufpumpluft) sowie die Baudetails des aufblasbaren Gitters 16 (Anzahl der Luftschläuche, deren Stellung, usw.) nicht Objekt der vorliegenden Erfindung und werden deshalb nicht ausführlich beschrieben. Im Bild 15 ist eine vorgezogene Realisationsvariante der Erfindung welche praktisch erlaubt, eine Limousine in einen Wagen des Typs Kombi zu verwandeln. Zu diesem Zweck bildet der pneumatisch aufblasbare Teil einen Kofferraum 18, welcher es erlaubt, das Volumen des herkömmlichen Kofferraumes einer Limousine beträchtlich zu erhöhen. Im platten Zustand wird der aufblasbare Teil 18, als leeren Körper, in den Kofferraumdeckel gestellt. Das Aufpumpen des aufblasbaren Teiles 18 kann beim Öffnen des Kofferraumdeckels geschehen. Auch für die Realisierung dieses Basiskonzeptes kommen verschiedene Lösungen in Frage, mit geeigneten Hebeln oder pneumatischen Kolben, über welche wir hier nicht Stellung nehmen wollen, da sie nicht zum Zweck der vorliegenden Erfindung gehören und durch einen Fachmann ausgeführt werden können.

Was die Werkstoffe betrifft aus welchen die Realisation des pneumatisch aufblasbaren Teiles laut dieser Erfindung vorteilhaft wäre, wollen wir hier nur klarstellen, dass der in den vorangehenden Bildern 1 bis 15 beschriebene pneumatisch aufblasbare Teil vorzugsweise erfinderisch aus Polyvinylchlorid (PVC) besteht. Wir denken an spinnfaserverstärktes PVC das widerstandsfähig ist gegen die Wirkung von Ultraviolettstrahlen, Temperaturen zwischen -60° und +80° aushält, gegen Säuren und dazu noch knitterfest ist. Der Fachmann wird ohne weiteres biegsames nicht elastisches Material finden, das diese Bedingungen erfüllt, braucht er nur auf die umfassenden auf diesem Gebiet gemachten Erfahrungen zurückzugreifen, nämlich auf vielen der Erfindungsidee nah und anfangs genannten Gebieten.

Wir haben mehrfach darauf hingewiesen, dass die Vorrichtungen mit welchen die pneumatisch aufblasbaren Bauteile laut Erfindung betätigt werden in verschiedenen Typen sein dürfen, z.B. manuell oder automatisch oder von Sensoren angetrieben, welche unter bestimmten vorgegebenen Aussenbedingungen reagieren.

Rein als Beispiel beschreiben wir hier, mit Hilfe des Bildes 16, eine Antriebs-und Steuerschaltung, geeignet für den Einsatz mit dem aufblasbaren Teil der vorliegenden Erfindung, ohne jedoch damit den Anspruch geltend zu machen, den Bereich der möglichen diesbezüglichen Realisationen erschöpft zu haben.

Eine Kraftversorgung- und Steuerungseinheit besteht aus einem mit 12 Volt betriebenen Kompressor 19 und einer auf einem SPS-Programmiergerät basierende Steuerungseinheit, sowie aus verschiedenen Sensoren, welche einen automatischen Betrieb ermöglichen. Die beschriebenen Bauelemente erlauben es, einen Teil aus verschiedenen Elementen aufzupumpen und der z.B. aus einem spinnfaserverstärkten biegsamen Material wie PVC zusammengesetzt ist. Der Aufpumpprozess des pneumatisch aufblasbaren Bauelementes beginnt nach der Schalterbetätigung oder infolge der automatischen Steuerung durch Sensoren. Der Kompressor 19 erzeugt Druckluft welche, nach einer Luftaufbereitungseinheit 20 und einem Luftspeicher 21, an einem Dreiwegventil 22 und an einer elektronisch gesteuerten Druckreduzierungseinheit 23 versorgt wird und von dort aus an einem anderen Dreiwegventil 24. Ein Thermometer 25 und ein Manometer 26 sind nach dem letzten Dreiwegventil 24 eingefügt, sodass der Steuerungsapparat 27 das ganze Abfüllungsprozess des aufblasbaren Teiles 28 überwachen kann. Die Steuerung 27 überwacht automatisch und in Abständen, durch das Thermometer 25 und den Manometer 26, den erfinderischen aufblasbaren Teil. Je nach Einsatz, können auch andere spezifische Sensoren eingefügt werden mit dem Zweck zu überwachen und zu steuern. Mit 33 zeigen wir einen Handschalter während mit 34 einen automatischen Schalter gezeigt wird, der den Steuerungsapparat 27 betätigt. Der Leerungsprozess wird von Hand oder automatisch durch Sensoren 29 begonnen. Im Dreiwegventil 22 wird die Druckluft des Kompressors 19 an eine Absaugdüse 30 befördert und der damit erzeugte Saugdruck saugt, mittels des Dreiwegventils 24, die Luft vom pneumatisch aufblasbaren Teil 28 durch einen Schalldämpfer 31, der sie in die Umgebung ausströmen lässt. An Stelle 32 können die pneumatischen Einheiten 22, 23, 24, 25, 26, 30 und 31 angeschlossen werden, um eine gleichzeitige Abfüllung und Leerung zweier aufblasbaren Teilen laut der vorliegenden Erfindung zu ermöglichen.

Die Vorteile der Erfindung sind vielfältig und unterschiedlich, je nach den Problemen die sie zu lösen ermöglicht. Generell können wir behaupten, dass dank den pneumatisch aufblasbaren Bauteilen, der Autohersteller über ein innovatives System verfügt, das sich auf grosse Erfahrung in Parallelsektoren zum Automobilsektor stützt. Dies, um die Probleme der Sicherheit für die Fahrzeuge, ihre Insassen und die anderen Verkehrsteilnehmer, für das Komfort, den Treibstoffverbrauch und den Schadenschutz des Fahrzeuges in Angriff zu nehmen. All dies mit der Verwendung von relativ einfachen und wenig teuren, ausserdem leicht und anpassungsfähigen Mitteln, welche eine Technologie bietet wie diejenige der aufblasbaren Teilen, heutzutage weitverbreitet und deshalb gut bewährt.

### VERZEICHNIS DER TEILE

- 1.: Fahrzeug
- 2.: Aufgeblasener Teil = Verdeck
- 3.: Gepäckträger
- 4.: Dach des Fahrzeuges
- 5.: Reissverschluss
- 6.: Streifen
- 7.: Hebewerk
- 8.: Heckspoiler
- 9.: Vorderspoiler
- 10.: Seitenspoiler (Minirock)
- 11.: Aufblasbarer Vorhang
- 12.: Abdeckung der Haube
- 13.: Schutz für die senkrechte Kante der Türe
- 14.: Seitenschutz
- 15.: Teil der Vorderstossstange
- 16.: Motorgitter
- 17.: Zufuhröffnung
- 18.: Kofferraum
- 19.: Kompressor
- 20.: Luftaufbereitungseinheit
- 21.: Speicher
- 22.: Dreiwegventil
- 23.: Druckreduzierungseinheit
- 24.: Druckreduzierungsventil
- 25.: Thermometer
- 26.: Manometer
- 27.: Steuerungsapparat
- 28.: Aufblasbarer Teil
- 29.: Sensor
- 30.: Absaugdüse
- 31.: Schalldämpfer
- 32.: Anschluss-Stelle
- 33.: Handschalter
- 34.: Automatischer Schalter

## Patentansprüche

1. Pneumatisch aufblasbarer Bauteil, ortsfest an einem Fahrzeug montiert,
**dadurch gekennzeichnet, dass**
der Teil (1, 2, 8, 9, 10, 11, 12, 13, 14, 15, 16, 18, 28) auf einer äusseren Stelle der Karosserie montiert ist und, nach dem Aufpumpen, eine Schutzfunktion für das Fahrzeug (1) und/oder gegen Unfälle und/oder andere Funktionen wie die aerodynamische Umänderung des Fahrzeuges (1) und/oder die Abänderung des Nutzvolumens des Fahrzeuges (1) und/oder ähnliche Funktionen ausübt, welche die Sicherheit und Zuverlässigkeit des Fahrzeuges (1) erhöhen.

2. Bauteil laut Patentanspruch 1,
**dadurch gekennzeichnet, dass**
das Aufpumpen mittels einer Pumpe geschieht, welche durch einen elektrischen Motor betätigt wird.

3. Bauteil laut Patentanspruch 2,
**dadurch gekennzeichnet, dass**
die Inbetriebsetzung des Aufpumpens durch den Benutzer von Hand geschieht, indem letzterer einen Schalter betätigt, welcher den Pumpmotor in Betrieb setzt und anhaltet.

4. Bauteil laut Patentanspruch 1,
**dadurch gekennzeichnet, dass**
das Aufpumpen mittels einer Pumpe geschieht, welche mechanisch durch den Antriebsmotor betätigt wird.

5. Bauteil laut Patentanspruch 2,
**dadurch gekennzeichnet, dass**
die Inbetriebsetzung des Aufpumpens automatisch je nach Bedarf des Teiles selbst durch einen Sensor geschieht, welcher die Nützlichkeit dessen feststellt.

6. Bauteil laut Patentanspruch 1,
**dadurch gekennzeichnet, dass**
der Bauteil (2, 3, 8, 9, 10, 11, 12, 13, 14, 15, 16, 18; 28) aus einem spinnfaserverstärktem Kunststoff besteht, der widerstandsfähig gegen die Wirkung von Ultraviolettstrahlen ist, und Temperaturen zwischen -60° e +80° aushält, gegen Säuren und dazu noch knitterfest ist.

7. Bauteil laut Patentanspruch 1,
**dadurch gekennzeichnet, dass**
der Teil das aufblasbare Verdeck (2) des Fahrzeuges (1), wenn aufgepumpt, das Fahrzeug schliesst.

8. Bauteil laut Patentanspruch 1,
**dadurch gekennzeichnet, dass**
der Teil einen Dachgepäckträger (3) (auch "Torpedo" genannt) auf dem Fahrzeug (1) bildet, welcher aus einer aufblasbaren Abdeckung , die sich durch Aufpumpen vom unverstellbarem Dach (4) des Fahrzeuges (1) hebt, und aus Teilen einer seitlichen Abdeckung (6) besteht, welche den Raum schliessen und einen geschlossenen Raum bilden.

9. Bauteil laut Patentanspruch 1,
**dadurch gekennzeichnet, dass**
der Teil einen Heckspoiler (8) des Fahrzeuges (1) bildet, welcher die eigene Stellung ändert indem er sich durch das Aufpumpen hebt.

10. Bauteil laut Patentanspruch 1,
**dadurch gekennzeichnet, dass**
der Teil den Vorderspoiler (9) des Fahrzeuges (1) bildet, welcher mit dem Aufpumpen sinkt und somit den Abstand zwischen Strasse und Fahrzeug (1) verringert.

11. Bauteil laut Patentanspruch 1,
**dadurch gekennzeichnet, dass**
der Teil aus einem Seitenspoiler (auch "Minirock" genannt) (10) des Fahrzeuges (1) besteht, welcher mit dem Aufpumpen absinkt und somit den Abstand zwischen Strasse und Fahrzeug (1) verringert.

12. Bauteil laut Pantentanspruch 1,
**dadurch gekennzeichnet, dass**
der Teil aus einem aufblasbaren Vorhang (11) besteht, welcher den Raum zwischen dem Rad des Fahrzeuges (1) und dessen Karosserie verringert.

13. Bauteil laut Patentanspruch 1,
**dadurch gekennzeichnet, dass**
der Teil eine Vorderhaube (12) des Fahrzeuges (1) bildet, welche mit dem Aufpumpen über der Haube eine elastische Prallfläche für die Leute entstehen lässt, welche beim Unfall überfahren werden.

14. Bauteil laut Patentanspruch 1,
**dadurch gekennzeichnet, dass**
der Teil einen Schutz für die senkrechte Kante der Türe (13) des Fahrzeuges (1) bildet

15. Bauteil laut Patentanspruch 1,
**dadurch gekennzeichnet, dass**
der Teil einen Seitenschutz (14) der Karosserie zwischen den zwei Rädern auf der gleichen Seite des Fahrzeuges (1) bildet.

16. Bauteil laut Patentanspruch 1;
**dadurch gekennzeichnet, dass**
der Teil einen Teil (15) der Vorderstossstange des Fahrzeuges (1) bildet.

17. Bauteil laut Patentanspruch 1,
**dadurch gekennzeichnet, dass**
der Teil einen Teil des Motorgitters (16) des Fahrzeuges (1) bildet, der mehr oder weniger die Motorkühlluftzufuhröffnung (17) schliesst, je nach grösserem oder geringerem Aufpumpgrad.

18. Bauteil laut Patentanspruch 1,
**dadurch gekennzeichnet, dass**
der Teil einen hinteren aufblasbaren Kofferraum (18) bildet, welcher eine Limousine in ein Fahrzeug des Typs Kombi verwandelt.
